# EUROPÄISCHE PATENTSCHRIFT

(11) **EP 1 437 282 B1**
(45) Veröffentlichungstag und Bekanntmachung des Hinweises auf die Patenterteilung: **07.11.2007**
(21) Anmeldenummer: 04000106.7
(22) Anmeldetag: 07.01.2004
(51) Int. Cl.: B61K 11/00, B65G 53/36

(54) **Vorrichtung und Verfahren zum Befüllen eines Vorratsbehälters eines Fahrzeuges mit Bremssand oder dergleichen Schüttgut**
Device and method for filling a storage vessel of a vehicle with brake sand
Dispositif et procédé pour le remplissage d'une sablière de frein d' un véhicule

(30) Priorität: 13.01.2003 DE 20301001 U
(43) Veröffentlichungstag der Anmeldung: 14.07.2004
(73) Patentinhaber: Klein Anlagenbau AG, 57568 Niederfischbach (DE)
(72) Erfinder: Federhen, Bernd, 57078 Siegen (DE)
(74) Vertreter: Hiebsch, Gerhard F.

(56) Entgegenhaltungen:
- DE-A- 2 443 552
- GB-A- 1 167 148
- US-A- 2 614 002
- US-B1- 6 419 425

## Beschreibung

Die Erfindung betrifft eine Vorrichtung zum Befüllen des Vorratsbehälters eines Fahrzeuges, insbesondere eines Schienenfahrzeuges, mit Bremssand oder dergleichen Schüttgut aus einer Tankstelle einer Schüttguttankstelle durch eine -- gegebenenfalls flexibel gestaltete -- Zuführleitung nach dem Oberbegriff des Patentanspruches 1. Zudem erfasst die Erfindung ein Verfahren sowie die Verwendung der Vorrichtung.

Durch die DE 24 43 552 C3 ist es bekannt, Schüttgüter mittels Fördereinrichtungen Verbrauchern zuzuteilen, etwa die Sandkästen von Schienenfahrzeugen mit Bremssand nachzufüllen. Für diese Aufgabe muss eine Zuteilvorrichtung in der Lage sein, wechselnde Mengen bis zu etwa vierzig Litern Schüttgut je Zuteilvorgang abzugeben. Für den Fördervorgang von der Zuteilvorrichtung bis zum Sandkasten hat sich das seit vielen Jahren bekannte Schubförderverfahren durch mehrere Meter lange Schlauchleitungen bewährt. Hierbei bewegt sich der Sand als geschlossene Masse ohne Pfropfen und ohne zwischengelagerte Luftpolster durch die Förderleitung. Beim Schubförderverfahren werden nur geringe Luftmengen verbraucht, die Fördergeschwindigkeit ist sehr klein, es entstehen an flexiblen Förderleitungen keine schlagenden Bewegungen, und die geringen Förderluftmengen lassen sich mit geringem Aufwand am Sandbehälter fassen sowie einem Filter zuführen.

Die EP 0 561 679 B1 nimmt auf die DE 24 43 552 C3 Bezug und teilt sinngemäß mit, dass die Bedingungen für den Druck und den Durchsatz der komprimierten Luft im Transportbehälter in der Weise festzulegen seien, dass die Entleerung des körnigen Materials in die flexible Schlauchleitung einem Betrieb der festen Phase entspricht und dass das zweite Ende des starren, hohlen Rohrs mit einem abnehmbaren Verschluss versehen sei. Dieser besteht aus einer Platte, die einen im wesentlichen kreisförmigen Teil enthält, der dem zweiten Ende des Rohrs zugewandt ist, wenn sich der Verschluss in der geschlossenen Stellung befindet; die Platte ist in Bezug auf einen Stift, der sich in Längsrichtung entlang der Außenseite des Rohrs erstreckt und an der Platte in einem -- in Bezug auf deren kreisförmigen exzentrischen -- Teil festliegt, schwenkbar angebracht, und der Stift ist in Winkelrichtung durch einen mit ihm fest verbundenen Griff zu betätigen, der an dem jenem Verschluss gegenüberliegenden Ende des Stiftes vorgesehen ist.

Der in einem Silo bevorratete Sand wird also von einem pneumatischen Förderer durch Rohrleitungen Sandtankstellen zugeführt, aus denen dann der Sand durch Schläuche mit angeschlossenem, pistolenförmigem Ventil ebenfalls pneumatisch mittels Druckluft in die zu füllenden Bremssandbehälter transportiert wird. Der pneumatische Transport zu den Sandtankstellen erfolgt mit geringer Fördergeschwindigkeit im Pfropfenförderverfahren. Es gelangen deshalb wechselweise Sandpfropfen und zwischen zwei Sandpfropfen eingeschlossene Luftpolster in die Sandtankstellen. Sind die Sandtankstellen mit Sand gefüllt, werden die Einlassventile geschlossen.

Damit ein entleerter Sandbehälter einer Sandtankstelle unverzüglich wieder gefüllt werden kann, ist es üblich, auch in den Füllpausen den pneumatischen Förderer zwischen Silo und Sandtankstellen mit Förderdruck beaufschlagt zu halten. Beim Öffnen des Einlassventils der Sandtankstelle strömt dann sofort Sand mit Förderluft in den Sandbehälter der Sandtankstelle ein. Der Querschnitt des Einlassventils entspricht dem der Förderleitung, üblich sind Nennweiten von 65 und 80.

Der Sand und die Förderluft müssen sich im Druckbehälter der Sandtankstelle trennen, damit die Förderluft aus der einzigen Abluftöffnung durch das Abluftventil hin zum Filter abziehen kann. Durch die hin zur Abluftöffnung umgelenkte Förderluft entstehen im Druckbehälter Luftwirbel, die Sand mitreißen. Deshalb muss der Abstand zwischen Einlassventil für Sand mit Förderluft und der Abluftöffnung für die Förderluft so groß ausgeführt werden, dass in der abziehenden Förderluft keine groberen Sandpartikel mitgerissen werden; die Druckbehälter der Sandtankstellen haben entsprechend dem Stand der Technik mindestens einen Durchmesser von 300 bis 500 mm. Die Formteile zur Erweiterung vom Querschnitt des Einlassventils auf den Druckbehälterdurchmesser und die folgende Reduzierung auf den Schlauchdurchmesser sind teuer, und die Herstellung dieser Druckbehälter ist aufwendig.

Die Druckbehälter werden beim Füllen aus der Förderleitung und beim Transport des Sandes durch den Schlauch zum Sandkasten des Schienenfahrzeugs mit Überdruck beaufschlagt und müssen deshalb entsprechend gültiger Vorschriften -- beispielsweise nach der EG-Druckgeräterichtlinie -- ausgeführt werden. Mit dem Durchmesser und dem Betriebsdruck steigen die erforderlichen Wanddicken, das Gewicht und die Herstellkosten an.

Häufig ist in Depots, in denen diese Sandtankstellen aufgestellt werden, nicht ausreichend Platz zum Unterbringen dieser Geräte, so dass sie an die Dach- oder Wandkonstruktion aufgehängt werden müssen. Dann entstehen durch das hohe Gewicht der dickwandigen Druckbehälter zusätzliche Kosten an der Hallenkonstruktion.

Sowohl US-A 2 561 148 als auch US-A-2 768 769 offenbaren Vorrichtungen zum Füllen von Bremssandkästen von Lokomotiven. Diese Vorrichtungen bestehen im wesentlichen aus einem Standbein, auf den ein separater druckloser Vorratsbehälter mit großem Durchmesser aufgesetzt ist. Dieser Vorratsbehälter wird pneumatisch mit Sand gefüllt, welcher dann -- infolge der Schwerkraft ohne pneumatischen Transport -- durch geneigte Rohre in die Sandkästen gelangt. Die Rohre müssen so steil angeordnet sein, dass der Sand zu rutschen vermag. Mit diesen Vorrichtungen können nur Sandkästen von oben gefüllt werden, nicht aber Sandkästen mit seitlicher Öffnung. Die Dimensionen der Vorrichtungen werden durch die zum Rutschen des Sandes durch die Ablaufrohre notwendige Neigung und die von den Lokomotiven vorgegebenen Abstände der Sandkästen beträchtlich und der mechanische Aufwand sowie die damit verbundenen Kosten sehr hoch. Die Vorrichtungen erfüllen nicht die heutigen Anforderungen in Bezug auf Schienenfahrzeug-Depots.

In Kenntnis dieser Gegebenheit hat sich der Erfinder das Ziel gesetzt, eine Vorrichtung und ein Verfahren zu scharffen, mit denen die beschriebenen Mängel beseitigt werden sowie Sandtankstellen mit geringerem Grundflächenbedarf und geringeren Kosten zu verwirklichen.

Zur Lösung dieser Aufgabe führt die Lehre der unabhängigen Ansprüche; die Unteransprüche geben günstige Weiterbildung gen an. Zudem fallen in den Rahmen der Erfindung alle Kombinationen aus zumindest zwei der in der Beschreibung, der Zeichnung und/oder den Ansprüchen offenbarten Merkmale.

Erfindungsgemäß sind einem die Förderrichtung des Sandes und die Austragsrichtung für die Luft bestimmenden Einlaufkopf der Tanksäule strömungsleitende Einbauten zugeordnet. Zudem ist der Einlaufkopf zwischen einem Zulaufrohr für den Sand und einen Abluftkanal mit einem Sperrorgan ausgestattet, dank dessen der Förderquerschnitt für den Sand in Förderrichtung verschlossen werden kann. Die strömungslenkenden Einbauten enthalten im übrigen querschnittlich kleine Öffnungen, durch welche die Luftströmung im oberen Bereich des Speicherrohres beruhigend vergleichmäßigt wird und die in den zum Abluftventil führenden Raum münden. Auch sollen die Querschnitte der strömungsberuhigenden Öffnungen auf den Stauquerschnitt abgestimmt sein.

Am Fuße des Speicherrohresbefindet sich eine an sich bekannte Leitung für den Sandaustrag zum Fahrzeug hin. Dieses Speicherrohr soll einen kleinen Innendurchmesser von 120 mm bis 180 mm -- insbesondere von 150 mm -- aufweisen oder in einer anderen Ausgestaltung einen geringen Querschnitt polygonen Umrisses. Am Einlaufkopf des säulenförmig mit geringem Durchmesser ausgeführten Sandspeicherbehälters der Sandtankstelle wird aus der zuführenden Förderleitung Sand und Förderluft eingeleitet und die Förderluft durch die strömungslenkenden Einrichtungen so beeinflusst, dass sie ohne gröbere Sandpartikel abgeführt zu werden vermag.

Der Füllvorgang des säulenförmigen Sandspeicherbehälters erfolgt trotz der in der zuführenden Förderleitung herrschenden Pfropfenförderung dank der Erfindung nahezu ohne Stöße.

Zudem soll das Zulaufrohr einer Einlassöffnung in einem seitlichen Gehäuseabschnitt zugeordnet sowie der Förderquerschnitt vom Fußrand eines Innengehäuses des Einlaufkopfes gebildet sein.

Als günstig hat es sich erwiesen, den Förderquerschnitt bzw. den Fußrand des Innengehäuses des Einlaufkopfes unter Zwischenschaltung eines Stauquerschnittes dem Zulaufrohr nachzuordnen, wobei das freie Ende des Innengehäuses mit seinem Fußrand dem Innenraum des Speicherrohres zugeordnet sein soll.

Der Stauquerschnitt wird von einem einen Abschnitt des Innengehäuses durchsetzenden Radialschlitz gebildet, und dieser ist unterhalb der Einlassöffnung für das Zulaufrohr angeordnet.

Der Klarstellung halber sei wiederholt, dass der Sandspeicherbehälter aus einem dünnwandigen Rohr besteht, dessen Kopfbereich vom angeflanschten Einlaufkopf mit Ventilen für den Eintritt von Sand mit Förderluft, strömungslenkenden Einbauten und Auslass für die Förderluft gebildet wird. Die Einleitung der Förderluft für den Transport von der Sandtankstelle zu den Sandkästen der Schienenfahrzeuge und die Steuerung des Sandspiegels über Sonden erfolgt so, dass der Abluftbereich des Einlaufkopfes von der einströmenden Förderluft sandfrei gehalten wird.

Im Rahmen der Erfindung liegt ein als Spreizteller ausgebildetes Sperrorgan aus begrenzt elastischem Werkstoff, das an einer im Einlaufkopf bewegbaren Kolbenstange eines Linearantriebs angeordnet ist und mit dieser bewegt wird. Die Längsachse der Kolbenstange soll koaxial zum Innengehäuse des Einlaufkopfes verlaufen und das Sperrorgan bzw. der Spreizteller mit einem von seinem Umfang abragend angeformten Radialwulst versehen sein, der in Schließstellung unter Verformung des elastischen Werkstoffes dem Fußrand des Innengehäuses anliegt.

Als günstig hat es sich erwiesen, dass der Spreizteller einem Fußteller der Kolbenstande aufsitzt und diesen mit einem angeformten Randkragen umfängt, wobei in die gehäusewärtige Oberfläche des Spreiztellers eine trichterartige Einformung eingeformt sein soll.

Erfindungsgemäß ist das Innengehäuse des Einlaufkopfes zumindest teilweise von einem Außengehäuse umgeben, das mit einem Abschnitt der Außenfläche des Innengehäuses einen axialen Gehäusedurchgang für Abluft begrenzt, der mit dem Innenraum des Speicherrohres verbunden ist; dieses Außengehäuse soll dem Gehäuseabschnitt mit der Einlassöffnung etwa radial gegenüber liegen sowie an einen Abluftkanal angeschlossen sein, der mit einem Abluftventil versehen ist.

Letzteres bzw. sein Abluftkanal ist zudem an eine Rückluftleitung mit Filter angeschlossen.

Nach einem anderen Merkmal der Erfindung mündet in das Außengehäuse zumindest eine Druckluftleitung mit Ventil.

Als günstig hat es sich erwiesen, das Speicherrohr mit einem Endflansch zu versehen und diesen mit einem Flanschfuß des Einlaufkopfes zu verbinden. Der Flanschfuß ist Teil des Gehäuseabschnittes der Einlassöffnung sowie Teil des Außengehäuses des Einlaufkopfes.

An einem gemeinsamen Einlaufkopf können auch mehrere parallele Sandspeicherrohre mit Querrohren als sanddurchlässigen Verbindungen, durch die der Sand rieseln kann, gekoppelt werden. Damit lassen sich Sandtankstellen mit geringster Bautiefe bei großem Volumen realisieren.

Die säulenförmigen Sandspeicherbehälter können vertikal oder geneigt, stehend oder hängend angeordnet werden. Bei geneigter Anordnung muss der Winkel zur Horizontalen erfindungsgemäß mindestens so groß gewählt werden, dass der Sand im Sandspeicher zum unteren Ende rutscht. Der Winkel sollte größer als 30° sein.

Besonders bei vertikal hängender Anordnung der Sandtanksäule kann das Speicherrohr auch als flexibler Schlauch ausgeführt werden.

Bei dem erfindungsgemäß Verfahren zum Befüllen des Vorratsbehälters eines Fahrzeuges mit Bremssand durch eine Zuführleitung einer Schüttguttankstelle, wobei der Bremssand durch eine Förderleitung zugeführt sowie Abluft durch eine Entlüftungseinrichtung entnommen werden soll, wird dem Einlasskopf aus der zuführenden Förderleitung Sand und Förderluft zugeleitet, und die Förderluft wird durch die strömungslenkenden Einrichtungen so beeinflusst, dass sie ohne gröbere Sandpartikel abgeführt zu werden vermag. Zudem soll die Förderluft für den Transport von der Sandtankstelle zu dem Sandkasten des Schienenfahrzeuges und die Steuerung des Sandspiegels so geführt werden, dass der Abluftbereich des Einlaufkopfes von der einströmenden Förderluft sandfrei gehalten wird.

Auch hat es sich als günstig erwiesen, wenn das Auslassventil beim Öffnungsvorgang des Einlassventils kurzzeitig geschlossen sowie vor dem Öffnungsvorgang des Einlassventils der Überdruck im Speicherrohr abgebaut wird.

Zudem soll die Entlüftungseinrichtung beim Öffnungsvorgang der Förderleitung kurzzeitig geschlossen und/oder vor dem Öffnungsvorgang der Überdruck im Speicherrohr abgebaut werden.

Zudem liegt im Rahmen der Erfindung die Verwendung der Vorrichtung zum Befüllen des Vorratsbehälters eines Fahrzeuges, insbesondere eines Schienenfahrzeuges.

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt jeweils skizzenhaft in:
- Fig. 1, 2:: eine Sandtankanlage mit mehreren Sandtanksäulen in einem Straßenbahndepot mit zwei parallelen Gleisen in Seitenansicht sowie im Grundriss;
- Fig. 3:: eine Sandtanksäule mit einem Einlaufkopf auf einem vertikal stehenden Sandspeicherrohr als Einzelrohr;
- Fig. 4:: ein geneigt hängendes Sandspeicherrohr als Doppelrohr;
- Fig. 5:: einen Längsschnitt durch einen Abschnitt eines Einlaufkopfes;
- Fig. 6:: einen Teil des Einlaufkopfes der Fig. 5 in anderer Betriebsstellung.

Auf einem Paar von Schienen 10 ist ein Fahrzeug 12 einer Straßenbahn oder eines entsprechenden Systems zu erkennen, das nach oben hin mit einem Fahrdraht 14 in Berührung steht und dessen nicht sichtbare Bremssand-Behälter in einermehrere Tanksäulen 16 aufweisenden -- Besandungsstation gefüllt werden.

Dazu wird aus einem Silo 20 mittels eines pneumatischen Förderers 22 durch Förderleitungen 24 mehreren Einlaufköpfen 26 mit Zulaufrohren 27 jener Sandtanksäulen 16 Sand zugefördert. Die mit letzterem in die Sandtanksäule 16 eingeströmte Luft verlässt diese über eine kopfwärtige Anschlussleitung 28 und strömt durch eine Rückluftleitung 30 zu einem Filter 32.

Aus der Sandtanksäule 16 gelangt der Sand durch Schläuche 34 zu Einfüllstutzen 40 jener im Fahrzeug 12 befindlichen Bremssandkästen. Der pneumatische Förderer 22 kann über das dargestellte Förderleitungssystem 24, 26 mehrere Sandtankstellen mit Sand beschicken.

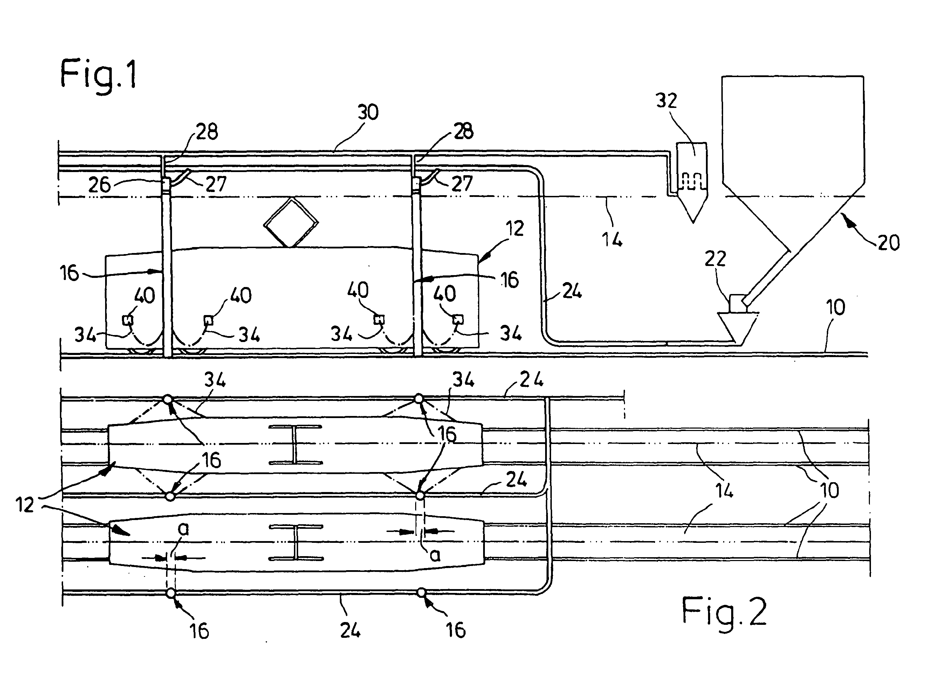

Der Fig. 2 ist zu entnehmen, dass besonders im Bereich zwischen den beiden bei 12 angedeuteten Straßenbahnen od. dgl. Fahrzeugen die geringe Weite a der Sandtanksäulen 16 es ermöglicht, Bedienungspersonal dort mit weniger Gefahr arbeiten zu lassen, als dies bei Sandtankstellen großen Durchmessers der Fall wäre.

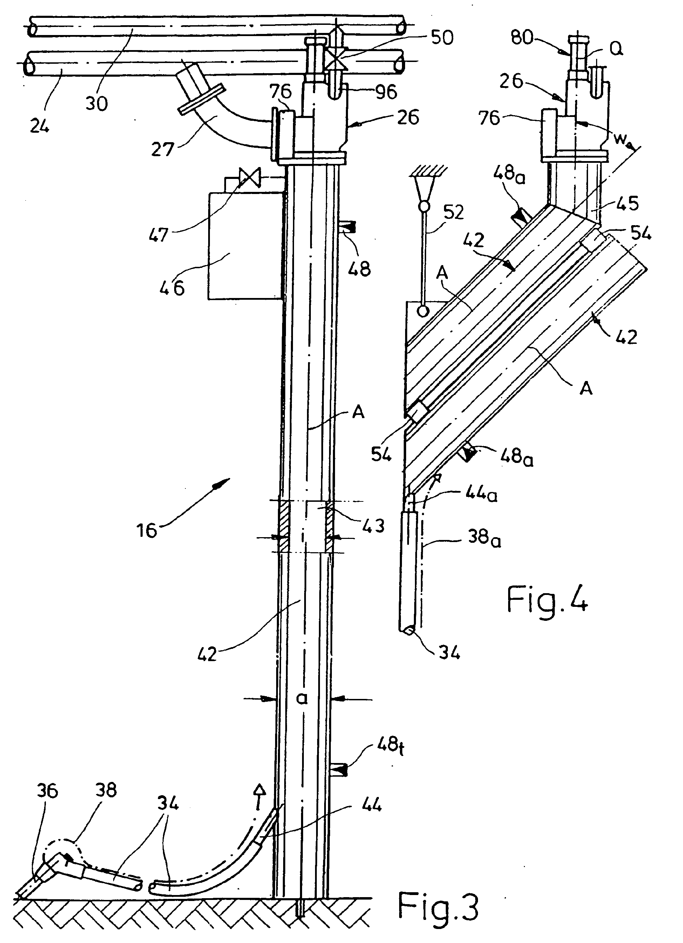

Die Sandtanksäule 16 enthält gemäß Fig. 3 ein -- bodenwärts mit einer Platte verschlossenes -- Sandspeicherrohr 42, an dessen Innenraum 43 im unteren Bereich seitlich ein Anschlussrohr 44 für den -- mit einem Füllventil 36 und einem Absaugschlauch 38 -- für aus dem Sandkasten zurückgesaugte Förderluft ausgestatteten -- Schlauch 34 angebracht ist; die Förderluft wird aus dem Sandkasten abgesaugt und durch die Rückluftleitung 30 dem Filter 32 zugeleitet.

Der Sandfüllstand und der Taktablauf werden mittels -- auf eine dem Sandspeicherrohr 42 zugeordnete elektropneumatische Steuerung 46 wirkende -- Sonden 48, 48ₜ gesteuert. Die Sandzuleitung aus der pneumatischen Förderleitung 24 geschieht über das Zulaufrohr 27, und die mit dem Sand in die Sandtanksäule 16 eingebrachte Förderluft wird aus dem Einlaufkopf 26 der Sandtanksäule 16 durch ein Abluftventil 50 in die Rückluftleitung 30 abgeführt.

Mittels eines Belüftungsventils 47 wird der pneumatische Transport des Sandes aus dem Sandspeicherrohr 42 durch den Schlauch 34 und das Füllventil 36 in den nicht dargestellten Sandkasten der Straßenbahn 10 gesteuert. Förderdrücke, Schlauchabmessungen und Förderverfahren entsprechen hier dem bewährten Stand der Technik.

Eine erfindungsgemäße Vorrichtung in einer an Zugstangen 52 hängenden Bauform mit einem Paar von -- in einem Winkel w von nahezu 45° zur Vertikalen Q -- geneigten Sandspeicherrohren 42 zeigt Fig. 4. Diese Ausführung bietet den Vorteil großer Kopffreiheit, da sie in einer Höhe von beispielsweise 2 m angeordnet zu werden vermag.

Die Anordnung besteht aus einem Einlaufkopf 26, an den eines der Sandspeicherrohre 42 mit einem von der Rohrlängsachse A abgewinkelten Endabschnitt 45 angebaut ist. Ein zweites Sandspeicherrohr 42 ist durch Querrohre 54 so mit dem ersten Sandspeicherrohr 42 verbunden, dass der eingebrachte Sand beide Sandspeicherrohre 42 füllt und durch ein Anschlussrohr 44ₐ für den Schlauch 34 die Vorrichtung mittels pneumatischer Förderung zum Sandkasten des Schienenfahrzeuges 10 hin wieder verlassen kann. Mit 38ₐ ist ein Absaugschlauch bezeichnet, mit 48ₐ sind Füllstandsonden zur Steuerung der Vorrichtung hervorgehoben.

Bei der hier beschriebenen Vorrichtung kann auch nur ein einziges Sandspeicherrohr 42 vorhanden sein, oder es werden mehr als zwei Sandspeicherrohre 42 in dieser Anordnung gewählt.

Der Winkel w muss so gewählt werden, dass der Sand zum Anschlussrohr 44ₐ rutscht; er muss also größer sein als 30°. Wenn der Winkel w größer als 45° wird, müssen die Querschnitte so groß gewählt werden, dass der Sand durch diese von einem Sandspeicherbehälter in den nächsten Sandspeicherbehälter rutschen kann. Oder die Querrohre 54 müssen zum nächsten Sandspeicherrohr 42 geneigt angeordnet werden.

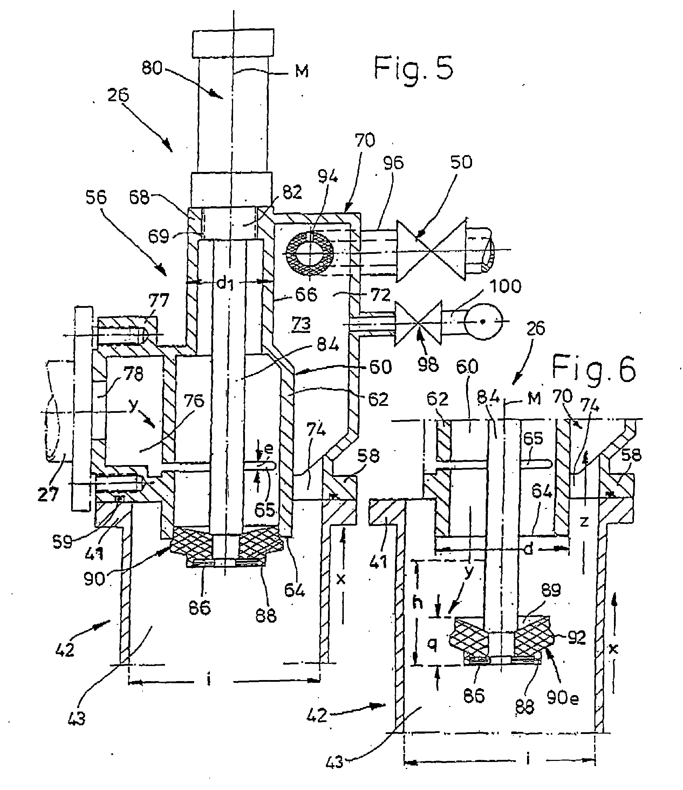

Einzelheiten des oben erwähnten Einlaufkopfes 26 werden in Fig. 5, 6 verdeutlicht. Dieser enthält ein Gehäuse 56 asymmetrischen Längsschnittes, an dessen bodenwärts weisenden Flanschfuß 58 -- unter Zwischenschaltung einer Ringdichtung 59 -- ein Endflansch 41 des Sandspeicherrohres 42 angesetzt ist. Der Flanschfuß 58 ist zum einen an ein zylindrisches Innengehäuse 60 angeformt, zum anderen an ein dieses teilweise umgebendes -- jenen asymmetrischen Längsschnitt bedingendes -- Außengehäuse 70.

Ein Fußabschnitt 62 eines äußeren Durchmessers d des Innengehäuses 60 ragt einends durch den Flanschfuß 58 hindurch in das Sandspeicherrohr 42, geht nach oben hin in einen Kopfabschnitt 66 geringeren Außendurchmessers d₁ über. An dessen Firstplatte 68 ist ein Seitenteil 72 des Außengehäuses 70 angeformt und geht -- unter Begrenzung eines horizontalen schlitzförmigen Gehäusedurchganges 74 im Flanschbereich -- in den Flanschfuß 58 über. An diesem ist an der in Fig. 5 anderen Seite des Innengehäuses 60 ein Gehäuseabschnitt 76 mit Flanschanformungen 77 angeformt, der eine radiale Einlassöffnung 78 für das erwähnte Zulaufrohr 27 zugeordnet enthält.

Die Firstplatte 68 des Kopfabschnittes 66 vom Innengehäuse 60 nimmt in einem zentralen Durchbruch 69 einen unteren Schraubring 82 eines koaxialen Linearantriebes 80 auf, aus dem eine Kolbenstange 84 ragt; zu deren Längsachse M verläuft das Innengehäuse 60 koaxial. Das freie Ende der Kolbenstange 84 trägt auf einem Fußteller 86 einen Spreizteller 90 aus begrenzt flexiblem Werkstoff, der in Schließstellung nach Fig. 5 gegen den freien Rand 64 des Fußabschnitts 62 des Innengehäuses 60 gepresst und dabei verformt wird. In Fig. 6 ist der Spreizteller 90ₑ in entspannter Lage skizziert, d.h. seine axiale Dicke q ist größer als in Schließstellung; hier ist das axiale Hubmass h gegen die Schließrichtung x gezeigt, in welchem der Spreizteller 90, 90ₑ aus der Schließstellung in eine Öffnungsstellung verlagert wird und sich dabei im Sandspeicherrohr 42 befindet. Im übrigen ist der Spreizteller 90, 90ₑ unterseitig mit einem den Fußteller 86 umfangenden Randkragen 88 ausgestattet und oberseitig mit einer trichterartigen Einformung 89. In etwa halber Dicke q umfängt den Spreizteller 90, 90ₑ ein angeformter Radialwulst 92, der sich in Schließstellung an den Fußrand 64 des Fußabschnittes 62 des Innengehäuses 60 anschmiegt.

Das Gemisch aus Sand und Förderluft gelangt durch die Einlassöffnung in das Einlaufkopfgehäuse 56. Der Sand staut sich vor einem Stauquerschnitt, der von einem Radial- oder Querschlitz 65 der Breite e im Fußabschnitt 62 des Innengehäuses 60 gebildet wird.

Bei geöffnetem Spreizteller 90ₑ können -- vom Zulaufrohr 27 kommend -- Sand und Förderluft durch diesen Querschlitz 65 und den inneren Querschnitt des Fußabschnitts 62 in Förderrichtung y strömen. Die Intensität der Strömung wird von der offenen Schlitzfläche und dem Porenquerschnitt der sich vor dem Querschlitz 65 stauenden Sandkörner bestimmt.

Infolge ihrer Bewegungsenergie strömen die Sandkörner seitlich am Spreizteller 90ₑ vorbei und füllen das angeflanschte Sandspeicherrohr 42. Die mit dem Sand eingebrachte Förderluft strömt durch den querschnittlich sichelförmigen Kanalraum oder Gehäusedurchgang 74 in Austragsrichtung z nach oben und staut vor Öffnungen 94 in der Wand eines schlauchartigen Abluftkanals 96, der im Abluftventil 50 mündet. Die Öffnungen 94 sind über die Länge des Abluftkanals 96 im Gehäuse 56 verteilt. Sie können auch flächig angeordnet werden. Ihr offener Querschnitt und ihre Anzahl sind auf den offenen Querschnitt des Querschlitzes 65 so abgestimmt, dass im aufsteigenden Kanal 73 des Gehäuseseitenteils 72 eine wirbelarme, relativ langsam aufsteigende Luftströmung besteht. Dann fallen etwa mitgerissenen Sandkörner infolge der Schwerkraft nach unten in das Sandspeicherrohr 42.

Um den beim Öffnen des vom Spreizteller 90 gebildeten Verschluss auftretenden Druckstoß zu mindern, wird das Abluftventil 50 während der Hubbewegung des Spreiztellers 90 für einige Sekunden geschlossen. Ehe der Speizteller 90 geöffnet wird, ist es vorteilhaft, den im Sandspeicherrohr 42 und im Gehäuse 56 vorhandenen Überdruck durch das Abluftventil 50 abzubauen.

Unterhalb dessen ist in Fig. 5 ein Ventil 98 in einer Leitung 100 zu erkennen, mit der Druckluft eingeleitet wird, um den Sand aus dem Sandspeicherrohr 42 hin zum Sandkasten des Schienenfahrzeuges 10 zu transportieren.

Untersuchungen haben ergeben, dass mit dieser Vorrichtung und dem beschriebenen Betriebsverfahren bei einem inneren Durchmesser i des Sandspeicherrohres 42 von nur 150 mm nur 0,014 Promille der eingeförderten Sandmenge mit einer Korngröße über 0,25 mm in den Abluftkanal 96 mitgerissen werden. In Dauerversuchen wurde kein Verschleiß im Abluftkanal 96 und in der anschließenden Rückluftleitung 30 festgestellt.

## Patentansprüche

1. Vorrichtung zum Befüllen des Vorratsbehälters eines Fahrzeuges (12), insbesondere eines Schienenfahrzeuges, mit Bremssand oder dergleichen Schüttgut aus einer Tanksäule (16) einer Schüttguttankstelle durch eine Zuführleitung (34) für den Sandaustrag zum Fahrzeug (12) hin, wobei die Zuführleitung an einen als Speicherrohr (42) ausgebildeten Speicherbehälter der Tanksäule angeschlossen und letztere mit einer Förderleitung für Sand sowie einem Abluftkanal (96) versehen ist,
**dadurch gekennzeichnet,**
**dass** einem die Förderrichtung (y) des Sandes und die Austragsrichtung (z) für die Luft bestimmenden Einlaufkopf (26) der Tanksäule (16) strömungsleitende Einbauten zugeordnet sind sowie der Einlaufkopf zwischen dem Zulaufrohr (27) für den Sand und dem Abluftkanal (96) mit einem Sperrorgan (90) ausgestattet ist, mit dem der Förderquerschnitt (64) für den Sand in Förderrichtung (y) verschließbar ausgebildet ist.

2. Vorrichtung nach Anspruch 1, **dadurch gekennzeichnet, dass** die strömungslenkenden Einbauten querschnittlich kleine Öffnungen (74) enthalten, durch welche die Luftströmung im oberen Bereich des Speicherrohres (42) beruhigend vergleichmäßigbar ist und die in den zum Abluftventil (50) führenden Raum (72, 96) münden.

3. Vorrichtung nach Anspruch 2, **dadurch gekennzeichnet, dass** die Querschnitte der strömungsberuhigenden Öffnungen auf den Stauquerschnitt abgestimmt sind.

4. Vorrichtung nach Anspruch 1, **dadurch gekennzeichnet, dass** das Zulaufrohr (27) einer Einlassöffnung (78) in einem seitlichen Gehäuseabschnitt (76) des Einlaufkopfes (26) zugeordnet ist.

5. Vorrichtung nach Anspruch 1 oder 4, **dadurch gekennzeichnet, dass** der Förderquerschnitt vom Fußrand (64) eines Innengehäuses (60) des Einlaufkopfes (26) bestimmt ist.

6. Vorrichtung nach Anspruch 1 oder 5, **dadurch gekennzeichnet, dass** der Förderquerschnitt bzw. der Fußrand (64) des Innengehäuses (60) des Einlaufkopfes (26) unter Zwischenschaltung eines Stauquerschnittes dem Zulaufrohr (27) nachgeordnet ist.

7. Vorrichtung nach Anspruch 5 oder 6, **dadurch gekennzeichnet, dass** das freie Ende des Innengehäuses (60) mit seinem Fußrand (64) dem Innenraum (43) des Speicherrohres (42) zugeordnet ist.

8. Vorrichtung nach Anspruch 6 oder 7, **dadurch gekennzeichnet, dass** der Stauquerschnitt von einem einen Abschnitt des Innengehäuses (60) durchsetzenden Radialschlitz (65) gebildet und dieser unterhalb der Einlassöffnung (78) für das Zulaufrohr (27) angeordnet ist.

9. Vorrichtung nach einem der Ansprüche 1 bis 8, **dadurch gekennzeichnet, dass** das Sperrorgan als Spreizteller (90) aus begrenzt elastischem Werkstoff ausgebildet sowie an einer im Einlaufkopf (26) bewegbaren Kolbenstange (84) eines Linearantriebs (80) angeordnet ist.

10. Vorrichtung nach Anspruch 9, **dadurch gekennzeichnet, dass** die Längsachse (M) der Kolbenstange (84) koaxial zum Innengehäuse (60) des Einlaufkopfes (28) verläuft.

11. Vorrichtung nach Anspruch 1 oder 9, **dadurch gekennzeichnet, dass** das Sperrorgan bzw. der Spreizteller (90) mit einem von seinem Umfang abragend angeformten Radialwulst (92) versehen ist, der in Schließstellung unter Verformung des elastischen Werkstoffes dem Fußrand (64) des Innengehäuses (60) anliegt.

12. Vorrichtung nach einem der Ansprüche 9 bis 11, **dadurch gekennzeichnet, dass** der Spreizteller (90) einem Fußteller (86) der Kolbenstange (84) aufsitzt und diesen mit einem angeformten Randkragen (88) umfängt.

13. Vorrichtung nach einem der Ansprüche 9 bis 12, **dadurch gekennzeichnet, dass** in die gehäusewärtige Oberfläche des Spreiztellers (90) eine trichterartige Einformung (89) eingebracht ist.

14. Vorrichtung nach einem der Ansprüche 5 bis 13, **dadurch gekennzeichnet, dass** das Innengehäuse (60) des Einlaufkopfes (26) zumindest teilweise von einem Außengehäuse (70) umgeben ist, das mit einem Abschnitt der Außenfläche des Innengehäuses einen axialen Gehäusedurchgang (74) für Abluft begrenzt, der mit dem Innenraum des Speicherrohres (42) verbunden ist.

15. Vorrichtung nach Anspruch 4 und 14, **dadurch gekennzeichnet, dass** das Außengehäuse (70) dem Gehäuseabschnitt (76) mit der Einlassöffnung (78) etwa radial gegenüber liegt.

16. Vorrichtung nach Anspruch 14 oder 15, **dadurch gekennzeichnet, dass** das Außengehäuse (70) an einen Abluftkanal (96) angeschlossen und dieser mit einem Abluftventil (50) versehen ist.

17. Vorrichtung nach Anspruch 16, **dadurch gekennzeichnet, dass** der Abluftkanal (96) an eine Rückluftleitung (30) mit Filter (32) angeschlossen ist.

18. Vorrichtung nach einem der Ansprüche 14 bis 17, **dadurch gekennzeichnet, dass** in das Außengehäuse (70) zumindest eine Druckluftleitung (100) mit Ventil (98) mündet.

19. Vorrichtung nach einem der Ansprüche 1 bis 18, **gekennzeichnet durch** einen Innendurchmesser (i) des Speicherrohres (42) von 120 mm bis 180 mm oder **durch** einen geringen Querschnitt des Speicherrohres (42) polygonen Umrisses.

20. Vorrichtung nach einem der Ansprüche 1 bis 19, **dadurch gekennzeichnet, dass** das Speicherrohr (42) mit einem Endflansch (41) versehen und dieser mit einem Flanschfuß (58) des Einlaufkopfes (26) verbunden ist.

21. Vorrichtung nach Anspruch 20, **dadurch gekennzeichnet, dass** der Flanschfuß (58) Teil des Gehäuseabschnittes (76) der Einlassöffnung (78) sowie Teil des Außengehäuses (70) des Einlaufkopfes (26) ist.

22. Vorrichtung nach einem der Ansprüche 1 bis 21, **dadurch gekennzeichnet, dass** der Einlaufkopf (26) mit zumindest zwei Speicherrohren (42) verbunden ist, die miteinander durch sanddurchlässige Querverbindungen, insbesondere durch Querrohre (54), radial verbunden sind.

23. Vorrichtung nach Anspruch 22, **dadurch gekennzeichnet, dass** das/die Speicherrohr/e (42) zur Längsachse (M) des Einlaufkopfes (26) in einem Winkel (w) zwischen etwa 30° bis etwa 50° verläuft/verlaufen.

24. Vorrichtung nach einem der Ansprüche 1 bis 23, **dadurch gekennzeichnet, dass** das/die Speicherrohr/e (42) hängend angeordnet ist/sind.

25. Vorrichtung nach Anspruch 24, **dadurch gekennzeichnet, dass** das/die Speicherrohr/e gegebenenfalls als Schlauch ausgebildet ist/sind.

26. Verfahren zum Befüllen des Vorratsbehälters eines Fahrzeuges (12), insbesondere eines Schienenfahrzeuges, mit Bremssand (42) durch eine Zuführleitung (34) einer Schüttguttankstelle, bei dem der Bremssand durch eine Förderleitung (24) zugeführt sowie Abluft durch eine Entlüftungseinrichtung (96) entnommen wird, unter Einsatz der Vorrichtung nach wenigstens einem der vorangehenden Ansprüche, **dadurch gekennzeichnet, dass** dem Einlasskopf (26) aus der zuführenden Förderleitung (24) Sand und Förderluft zugeleitet werden und der Förderluft durch die strömungslenkenden Einrichtungen Sandpartikel entnommen werden.

27. Verfahren nach Anspruch 26, **dadurch gekennzeichnet, dass** die Förderluft für den Transport von der Sandtankstelle zu dem Sandkasten des Schienenfahrzeuges (12) gesteuert wird und durch die Steuerung des Sandspiegels so der Abluftbereich des Einlaufkopfes (26) von der einströmenden Förderluft sandfrei gehalten wird.

28. Verfahren nach Anspruch 26 oder 27, **dadurch gekennzeichnet, dass** die Entlüftungseinrichtung beim Öffnungsvorgang der Förderleitung (24) kurzzeitig geschlossen und/oder vor dem öffnungsvorgang der Überdruck im Speicherrohr (42) abgebaut wird.

29. Verwendung der Vorrichtung nach wenigstens einem der Ansprüche 1 bis 25 zum Befüllen des Vorratsbehälters eines Fahrzeuges (12), insbesondere eines Schienenfahrzeuges.

## Claims

1. Device for filling the supply container of a vehicle (12), in particular a rail vehicle, with brake sand or similar bulk material from a filling tower (16) of a bulk material filling station through a supply pipe (34) for sand discharge towards the vehicle (12), wherein the supply pipe is connected to a storage container of the filling tower designed as a storage pipe (42) and the filling tower is provided with a conveying pipe for sand and a waste-air channel (96), **characterised in that** flow-conducting internal fittings determining the conveying direction (y) of the sand and the discharge direction (z) for the air are assigned to an inlet head (26) of the filling tower (16), and the inlet head between the feed pipe (27) for the sand and the waste-air channel (96) is equipped with a shut-off element (90), with which the conveying cross-section (64) for the sand is designed to be closable in conveying direction (y).

2. Device according to claim 1, **characterised in that** the flow-conducting internal fittings contain small openings (74) in the cross-section, through which the air flow in the upper region of the storage pipe (42) can be evened out smoothly and which lead into the space (72, 96) leading to the waste-air valve (50).

3. Device according to claim 2, **characterised in that** the cross-sections of the flow-smoothing openings are matched to the static cross-section.

4. Device according to claim 1, **characterised in that** the feed pipe (27) is assigned to an inlet opening (78) in a lateral housing section (76) of the inlet head (26).

5. Device according to claim 1 or 4, **characterised in that** the conveying cross-section is determined by the base edge (64) of an inner housing (60) of the inlet head (26).

6. Device according to claim 1 or 5, **characterised in that** the conveying cross-section or the base edge (64) of the inner housing (60) of the inlet head (26) is arranged downstream of the feed pipe (27) with interposition of a static cross-section.

7. Device according to claim 5 or 6, **characterised in that** the free end of the inner housing (60) with its base edge (64) is assigned to the interior (43) of the storage pipe (42).

8. Device according to claim 6 or 7, **characterised in that** the static cross-section is formed by a radial slot (65) penetrating a section of the inner housing (60) and the radial slot (65) is arranged below the inlet opening (78) for the feed pipe (27).

9. Device according to one of claims 1 to 8, **characterised in that** the shut-off element is designed as a spreading plate (90) made from material of limited elasticity and is arranged on a piston rod (84) of a linear drive (80) which can be moved in the inlet head (26).

10. Device according to claim 9, **characterised in that** the longitudinal axis (M) of the piston rod (84) runs coaxially to the inner housing (60) of the inlet head (28).

11. Device according to claim 1 or 9, **characterised in that** the shut-off element or the spreading plate (90) is provided with a radial bead (92) moulded-on to be projecting from its periphery and which rests on the base edge (64) of the inner housing (60) in the closed position with deformation of the resilient material.

12. Device according to one of claims 9 to 11, **characterised in that** the spreading plate (90) sits on a base plate (86) of the piston rod (84) and encompasses the latter with a moulded-on edge collar (88).

13. Device according to one of claims 9 to 12, **characterised in that** a funnel-like recess (89) is introduced into the housing-side surface of the spreading plate (90).

14. Device according to one of claims 5 to 13, **characterised in that** the inner housing (60) of the inlet head (26) is surrounded at least partly by an outer housing (70), which defines an axial housing passage (74) for waste air with a section of the outer surface of the inner housing and which is connected to the interior of the storage pipe (42).

15. Device according to claim 4 and 14, **characterised in that** the outer housing (70) lies approximately radially opposite the housing section (76) with the inlet opening (78).

16. Device according to claim 14 or 15, **characterised in that** the outer housing (70) is connected to a waste-air channel (96) and the latter is provided with a waste-air valve (50).

17. Device according to claim 16, **characterised in that** the waste-air channel (96) is connected to a return air pipe (30) with filter (32).

18. Device according to one of claims 14 to 17, **characterised in that** at least one compressed-air pipe (100) with valve (98) leads into the outer housing (70).

19. Device according to one of claims 1 to 18, **characterised by** an internal diameter (i) of the storage pipe (42) of 120 mm to 180 mm or by a small cross-section of the storage pipe (42) of polygonal outline.

20. Device according to one of claims 1 to 19, **characterised in that** the storage pipe (42) is provided with an end flange (41) and the latter is connected to a flange base (58) of the inlet head (26).

21. Device according to claim 20, **characterised in that** the flange base (58) is part of the housing section (76) of the inlet opening (78) and part of the outer housing (70) of the inlet head (26).

22. Device according to one of claims 1 to 21, **characterised in that** the inlet head (26) is connected to at least two storage pipes (42), which are connected radially to one another by sand-permeable cross-connections, in particular by transverse pipes (54).

23. Device according to claim 22, **characterised in that** the storage pipe/s (42) runs/run at an angle (w) between about 30° to about 50° to the longitudinal axis (M) of the inlet head (26).

24. Device according to one of claims 1 to 23, **characterised in that** the storage pipe/s (42) is/are arranged to be suspended.

25. Device according to claim 24, **characterised in that** the storage pipe/s is/are designed optionally as a hose.

26. Process for filling the supply container of a vehicle (12), in particular a rail vehicle, with brake sand (42) through a supply pipe (34) of a bulk material filling station, in which the brake sand is supplied through a conveying pipe (24) and waste air is removed through a ventilation device (96), while using the device according to at least one of the preceding claims, **characterised in that** sand and conveying air are supplied to the inlet head (26) from the supplying conveying pipe (24) and sand particles are removed from the conveying air by the flow-conducting devices.

27. Process according to claim 26, **characterised in that** the conveying air for transport from the sand filling station to the sand box of the rail vehicle (12) is controlled and by control of the sand level, the waste-air region of the inlet head (26) is thus kept sand-free by the inflowing conveying air.

28. Process according to claim 26 or 27, **characterised in that** the ventilation device is closed briefly during the opening process of the conveying pipe (24) and/or the excess pressure in the storage pipe (42) is let down before the opening process.

29. Use of the device according to at least one of claims 1 to 25 for filling the supply container of a vehicle (12), in particular a rail vehicle.

## Revendications

1. Dispositif de remplissage de récipient de stockage d'un véhicule (12), en particulier d'un véhicule ferroviaire, avec du sable de freinage ou un produit en vrac analogue, issu d'une colonne de réservoir (16) d'un poste réservoir de produits en vrac, au moyen d'une conduite d'amenée (34) pour l'évacuation du sable vers le véhicule (12), la conduite d'amenée étant raccordée à un réservoir accumulateur, réalisé sous la forme d'un récipient accumulateur (42), de la colonne de réservoir et cette dernière étant munie d'une conduite de transfert pour du sable, ainsi que d'un canal d'évacuation d'air (96), **caractérisé en ce que** des accessoires de garnissage intérieur, assurant le guidage de l'écoulement sont associés à une tête d'entrée (26), déterminant la direction de transfert (y) du sable et la direction d'évacuation (z) pour l'air, de la colonne de réservoir (16), et la tête d'entrée est équipée, entre le tube d'amenée (27) pour le sable et le canal d'évacuation d'air (96), d'un organe d'isolement (90) avec lequel la section transversale de transfert (64) pour le sable, dans la direction de transfert (y) est réalisée de façon à pouvoir être obturée.

2. Dispositif selon la revendication 1, **caractérisé en ce que** les équipements de garnissage intérieur assurant le guidage de l'écoulement contiennent des ouvertures (74) à petites sections transversales, au moyen desquelles l'écoulement d'air dans la zone supérieure du tube accumulateur (42) peut être homogénéisé avec un effet de tranquillisation et qui débouchent dans l'espace (72, 96) menant à la soupape d'évacuation d'air (50).

3. Dispositif selon la revendication 2, **caractérisé en ce que** les sections transversales des ouvertures assurant la tranquillisation de l'écoulement sont adaptées à la section transversale de retenue.

4. Dispositif selon la revendication 1, **caractérisé en ce que** le tube d'amenée (27) est associé à une ouverture d'admission (78) ménagée dans un tronçon de boîtier (76) latéral de la tête d'entrée (26).

5. Dispositif selon la revendication 1 ou 4, **caractérisé en ce que** la section transversale de transfert est déterminée par le bord de pied (64) d'un boîtier intérieur (60) de la tête d'entrée (26).

6. Dispositif selon la revendication 1 ou 5, **caractérisé en ce que** la section transversale de transfert, respectivement le bord de pied (64) du boîtier intérieur (60) de la tête d'entrée (26), est disposé(e) en aval du tube d'arrivée (27) avec interposition d'une section transversale de retenue.

7. Dispositif selon la revendication 5 ou 6, **caractérisé en ce que** l'extrémité libre du boîtier intérieur (60), avec son bord de pied (64), est associée à l'espace intérieur (43) du tube accumulateur (42).

8. Dispositif selon la revendication 6 ou 7, **caractérisé en ce que** la section transversale de retenue est formée par une fente radiale (65) traversant un tronçon du boîtier intérieur (60), et celle-ci est disposée au-dessous de l'ouverture d'entrée (78) pour le tube d'amenée (27).

9. Dispositif selon l'une des revendications 1 à 8, **caractérisé en ce que** l'organe d'isolement est réalisé sous forme de plateau d'écartement (90) en un matériau à élasticité limitée et est disposé sur une tige de piston (84), déplaçable dans la tête d'entrée (26), d'un entraînement linéaire (80).

10. Dispositif selon la revendication 9, **caractérisé en ce que** l'axe longitudinal (M) de la tige de piston (84) s'étend coaxialement au boîtier intérieur (60) de la tête d'entrée (28).

11. Dispositif selon la revendication 1 ou 9, **caractérisé en ce que** l'organe d'isolement, respectivement le plateau d'écartement (90), est muni d'un bourrelet radial (92) formé d'un seul tenant, en saillie de sa périphérie et, en position de fermeture, appuyant sur le bord de pied (64) du boîtier intérieur (60), avec déformation du matériau élastique.

12. Dispositif selon l'une des revendications 9 à 11, **caractérisé en ce que** le plateau écarteur (90) repose sur un plateau de pied (86) de la tige de piston (84) et entoure celui-ci avec une collerette de bordure (88) formée d'un seul tenant sur lui.

13. Dispositif selon l'une des revendications 9 à 12, **caractérisé en ce qu'**un creusement (89) du genre d'un entonnoir est ménagé dans la surface située côté boîtier du plateau écarteur (90).

14. Dispositif selon l'une des revendications 5 à 13, **caractérisé en ce que** le boîtier intérieur (60) de la tête d'entrée (26) est entouré au moins partiellement par un boîtier extérieur (70) qui, par un tronçon de la surface extérieure du boîtier intérieur, délimite un passage axial de boîtier (74) pour l'air d'évacuation, relié à l'espace intérieur du tube accumulateur (42).

15. Dispositif selon les revendications 4 et 14, **caractérisé en ce que** le boîtier extérieur (70) est placé à peu près à l'opposé radialement du tronçon de boîtier (76) présentant l'ouverture d'entrée (78).

16. Dispositif selon la revendication 14 ou 15, **caractérisé en ce que** le boîtier extérieur (70) est raccordé à un canal d'évacuation d'air (96), et celui-ci est muni d'une soupape d'évacuation d'air (50).

17. Dispositif selon la revendication 16, **caractérisé en ce que** le canal d'évacuation (96) est raccordé à une conduite de retour d'air (30) munie d'un filtre (32).

18. Dispositif selon l'une des revendications 14 à 17, **caractérisé en ce que**, dans le boîtier extérieur (70), débouche au moins une conduite d'air comprimé (100) munie d'une soupape (98).

19. Dispositif selon l'une des revendications 1 à 18, **caractérisé par** un diamètre intérieur (i) du tube accumulateur (42), d'une valeur de 120 mm à 180 mm, ou par une petite section transversale du tube accumulateur (42) à profil polygonal.

20. Dispositif selon l'une des revendications 1 à 19, **caractérisé en ce que** le tube accumulateur (42) est muni d'une bride d'extrémité (41) et celle-ci est reliée à un pied de bride (58) de la tête d'entrée (26).

21. Dispositif selon la revendication 20, **caractérisé en ce que** le pied de bride (58) fait partie du tronçon de boîtier (76) de l'ouverture d'entrée (78), ainsi que fait partie du boîtier extérieur (70) de la tête d'entrée (26).

22. Dispositif selon l'une des revendications 1 à 21, **caractérisé en ce que** la tête d'entrée (26) est reliée à au moins deux tubes accumulateurs (42), reliés ensemble radialement par des liaisons transversales perméables au sable, en particulier, par des tubes transversaux (54).

23. Dispositif selon la revendication 22, **caractérisé en ce que** le/les tube(s) accumulateur(s) (42) s'étend/s'étendent, sous un angle (w) entre à peu près 30° jusqu'à environ 50°, par rapport à l'axe longitudinal (M) de la tête d'entrée (26).

24. Dispositif selon l'une des revendications 1 à 23, **caractérisé en ce que** le/les tube(s) accumulateur(s) (42) est/sont disposé(s) de façon accrochée.

25. Dispositif selon la revendication 24, **caractérisé en ce que** le/les tube(s) accumulateur(s) est/sont le cas échéant réalisé(s) sous forme de tuyau.

26. Procédé de remplissage du récipient de stockage d'un véhicule (12), en particulier d'un véhicule ferroviaire, avec du sable de freinage (42), par une conduite d'amenée (34) d'un poste réservoir de produits en vrac, pour lequel le sable de freinage est amené par une conduite de transfert (24) et de l'air d'évacuation étant prélevé par un dispositif de désaération (96), avec utilisation du dispositif selon au moins l'une des revendications précédentes, **caractérisé en ce qu'**à la tête d'entrée (26) sont amenés, depuis les conduites de transfert (24) à fonction d'alimentation, du sable et de l'air de transfert, et des particules de sable sont prélevés de l'air de transfert par les dispositifs assurant le guidage de l'écoulement.

27. Procédé selon la revendication 26, **caractérisé en ce que** l'air de transfert prévu pour le transport est commandé par le poste de réservoir à sable vers les caisses à sable du véhicule ferroviaire (12) et, ainsi, la zone d'évacuation d'air de la tête d'entrée (26) est maintenue exempte de sable par l'écoulement d'air de transfert entrant, au moyen de la commande du niveau de sable.

28. Procédé selon la revendication 26 ou 27, **caractérisé en ce que** le dispositif de désaération est brièvement fermé lors du processus d'ouverture de la conduite de transfert (24), et/ou la surpression régnant dans le tube accumulateur (42) est annulée avant le processus d'ouverture.

29. Utilisation du dispositif selon au moins l'une des revendications 1 à 25 pour le remplissage du récipient de stockage d'un véhicule (12), en particulier d'un véhicule ferroviaire.
